# EUROPEAN PATENT SPECIFICATION

(11) **EP 1 448 662 B1**
(45) Date of publication and mention of the grant of the patent: **16.06.2010**
(21) Application number: 02777156.7
(22) Date of filing: 19.09.2002
(51) Int. Cl.: C08G 65/26, B01J 27/26

(54) **PROCESS FOR PREPARING POLYOXYALKYLENE POLYETHER PRODUCTS**
VERFAHREN ZUR HERSTELLUNG VON POLYOXYALKYLENPOLYETHERPRODUKTEN
PROCEDE DE PREPARATION DE PRODUITS DE POLYETHER DE POLYOXYALKYLENE

(30) Priority: 20.09.2001 EP 01308020
(43) Date of publication of application: 25.08.2004
(73) Proprietor: Shell Internationale Research Maatschappij B.V., 2596 HR Den Haag (NL)
(72) Inventor: BRONS, Jeroen, Frans, Jochem, NL-3067 GJ Rotterdam (NL); ELEVELD, Michiel, Barend, NL-1031 CM Amsterdam (NL)
(86) International application number: PCT/EP2002/010531
(87) International publication number: WO 2003/025045

(56) References cited:
- WO-A-01/03831
- WO-A-01/62825
- WO-A-95/11213
- DD-A- 203 735
- US-A- 5 689 012

## Description

The present invention relates to a process for preparing polyoxyalkylene polyether products by reacting starter and alkylene oxide in the presence of a double metal cyanide complex catalyst.

### Background of the Invention

Polyoxyalkylene polyether products can be used for preparing polyurethanes by reacting them with polyisocyanates under appropriate conditions. Polyurethane products that can be made include polyurethane coatings, elastomers, sealants, foams, and adhesives.

Processes for preparing polyoxyalkylene polyether products such as polyether polyols with the help of double metal cyanide (DMC) compounds have become well known in the art. DMC catalysts have the advantage that they are highly active compared with strong basic catalysts like potassium hydroxide which are conventionally used in the preparation of polyoxyalkylene polyether products. Furthermore, it has been found to be especially advantageous to use DMC catalyst when preparing polyoxyalkylene polyether products in a continuous process. Generally, tubular reactors are being used for continuous process for preparing polyoxyalkylene polyether products, optionally having alkylene feed added at one or more points along the reactor. Such processes have been described in Japanese unexamined patent application (Kokai) 6(1994)-16806, Disclosure 37926 of Research Disclosure November 1995, and East German Patent specification 203,735.

US-A-5,689,012 discloses a continuous process for the preparation of polyoxyalkylene polyethers using DMC catalyst in a reactor which is either a tubular reactor or a continuously stirred tank reactor. If unreacted alkylene oxide is present, the alkylene oxide may be cooked out in a second reactor. Starter is always present to eliminate the potential for formation of very high molecular weight by-products. Only the final cook out to facilitate reaction of alkylene oxide may be performed without starter present. In Examples 2-7, the residual monomer is removed by stripping.

It has been found that a tubular reactor can be disadvantageous in the preparation of polyoxyalkylene polyether products with the help of DMC catalysts as the high concentration of reactant where the reactants are added to the tube, can lead to increased deactivation of the DMC catalyst. This is obviously undesirable.

However, the use of a continuously stirred tank reactor as described in US-A-5,689,012, has been found to give product containing substantial amounts of unreacted alkylene oxide. The latter is undesirable as well.

It has now surprisingly been found that polyoxyalkylene polyether products containing substantially no alkylene oxide can be obtained in high yield by first reacting starter and alkylene oxide in the presence of a DMC catalyst while mixing, and subsequently reacting the unreacted alkylene oxide in a pipe reactor.

### Summary of the invention

Therefore, the present invention relates to a process for preparing polyoxyalkylene polyether products, which process comprises (i) reacting starter and alkylene oxide in the presence of a double metal cyanide complex catalyst while mixing to obtain a product mixture containing at least 0.05 % wt and at most 10% wt of alkylene oxide, and (ii) reacting in a pipe reactor the mixture obtained in step (i) to obtain a polyoxyalkylene polyether product comprising less than 0.05 % wt alkylene oxide, and (iii) removing the product of step (ii) from the process.

### Detailed description of the invention

As mentioned above, polyoxyalkylene polyether products are well known in the art. Their preparation by reacting starter and alkylene oxide in the presence of DMC catalyst, is also well known. These processes were described in EP-A-090444 and EP-A-090445.

More recently, a large number of preferred specific embodiments of these processes was published. Such embodiments have been described for example in European application 01306107.2, PCT patent application PCT/EP01/03498 and in EP-A-912,625, EP-A-879,259, EP-A-1,066,334, EP-A-968,055, EP-A-654,302, EP-A-743,093, EP-A-700,949, EP-A-894,108 and EP-A-755,716. It will be clear to someone skilled in the art that the process of the present invention can be combined with any of the embodiments which are known to be beneficial to someone skilled in the art for a process comprising reacting starter and alkylene oxide in the presence of DMC catalyst.

The process according to the present invention can be used for batch, semi-batch and continuous operation. This process has been found to be especially suitable for the continuous preparation of polyoxyalkulene polyether product.

The alkylene oxide for use in the process according to the present invention, can in principle be any alkylene oxide. Preferably, the alkylene oxide comprises of from 2 to 10 carbon atoms, preferably of from 2 to 6 carbon atoms, more preferably of from 2 to 4 carbon atoms. Preferred alkylene oxides for use in the present invention are ethylene oxide, propylene oxide, butene oxide, styrene oxide, and the like, and mixtures thereof. Most preferably, the alkylene oxide is propylene oxide and/or ethylene oxide.

A wide range of starters can be used in the process according to the present invention. The starter may be water; ethylene glycol; diethylene glycol; triethylene glycol; propylene glycol; dipropylene glycol; tripropylene glycol; 1,2-, 1,3-, and 1,4-butylene glycols; neopentyl glycol; glycerine, trimethylolpropane; triethylolpropane; pentaerythritol, alpha-methylglucoside; hydroxymethyl-, hydroxyethyl-, and hydroxypropylglucosides; sorbitol, mannitol; sucrose; and other commonly used starters. Also suitable are monofunctional starters such as methanol, ethanol, 1-propanol, 2-propanol, n-butanol, 2-butanol, 2-ethylhexanol, and the like, as well as phenol, catechol, 4,4'-dihydroxybiphenyl, 4,4'-dihydroxydiphenylmethane.

Starters which are generally used are compounds containing at least 1 active hydrogen atoms, more preferably at least 2 active hydrogen atoms. Preferred starters are organic compounds containing on average at least 1 hydroxyl group, preferably containing on average more than 1 hydroxyl group. More preferably, the starters are organic compounds containing of from 2 to 6 hydroxyl groups. Examples of such alcohols are glycols, such as diethylene glycol, dipropylene glycol, glycerol, di- and polyglycerols, pentaerythritol, trimethylolpropane, triethanolamine, sorbitol and mannitol.

As extensively described in US-A-5,689,012, a relatively low molecular weight starter can be used, or a higher molecular weight starter can be used which is a lower molecular weight starter which has been reacted with monomer to form oligomeric or polymeric starter molecule. If a higher molecular weight starter is to be used, this is preferably a lower molecular weight starter molecule which has been reacted with alkylene oxide either in the presence of a conventional basic catalyst or in the presence of a DMC catalyst. However, this is well known for processes in which alkylene oxide is reacted with a starter in the presence of DMC catalyst. As mentioned before, the process of the present invention can be combined with any preferred embodiment known in the art.

DMC catalysts are well known in the art. It has been found that in the present invention in principle any DMC catalyst can be used which is known to be suitable for processes in which alkylene oxide is reacted with a starter.

Generally, DMC catalysts prepared according to the prior art and suitable for use in polymerization of alkylene oxides, exhibits a powder x-ray diffraction pattern exhibiting no detectable signals corresponding to highly crystalline zinc hexacyanocobaltate at about (d-spacing, angstroms) 5.07. More specifically, such DMC catalysts generally exhibit a powder x-ray diffraction pattern of (d-spacing, angstroms): 4.82 (br), 3.76 (br) and exhibits no detectable signals corresponding to highly crystalline zinc hexacyanocobaltate at about (d-spacing, angstroms): 5.07, 3.59, 2.54 and 2.28.

A process by which the DMC catalyst for use in the present invention can be prepared, has been described in Japanese application 4-145123. The catalyst which is prepared is a bimetallic cyanide complex having tertiary butanol coordinated as organic ligand. The bimetallic cyanide complex catalyst is prepared by mixing together aqueous solutions, or solutions in water and organic solvent mixtures, of a metal salt, preferably a salt of Zn(II) or Fe(II), and a polycyanometallate (salt), preferably containing Fe(III) or Co(III), and bringing tertiary butanol into contact with the bimetallic cyanide complex so obtained and removing the surplus solvent and tertiary butanol. In Reference Example 1, the surplus solvent and tertiary butanol are removed by suction filtration. The filter-cake obtained is washed with a 30 %wt tertiary butanol aqueous solution and filtered, and this is repeated. The filter cake is dried at 40 °C under reduced pressure and then pulverized.

Another process by which the DMC catalyst can be prepared, has been described in PCT patent application PCT/EP01/03498. The process described comprises the steps of:
(a) combining an aqueous solution of a metal salt with an aqueous solution of a metal cyanide salt and reacting these solutions, wherein at least part of this reaction takes place in the presence of an organic complexing agent, thereby forming a dispersion of a solid DMC complex in an aqueous medium;
(b) combining the dispersion obtained in step (a) with a liquid, which is essentially insoluble in water and which is capable of extracting the solid DMC complex formed in step (a) from the aqueous medium, and allowing a two-phase system to be formed consisting of a first aqueous layer and a layer containing the DMC complex and the liquid added;
(c) removing the first aqueous layer; and
(d) recovering the DMC catalyst from the layer containing the DMC catalyst.

Typically, the DMC catalyst according to PCT patent application PCT/EP01/03498 will have the formula

Zn₂[Co(CN)₆]Cl.nC.mH₂O.pA

wherein C is the ligand used and A is the compound of general formula (I) used. Preferably, C is tert-butyl alcohol and A is methyl tert-butyl ether, di-ethyl ether, di-isopropyl ether, tert-amyl methyl ether or di-butyl ether. Preferably, n is of from 0 to 10, m is of from 0 to 20 and p is of from 0 to 10.

The DMC catalysts of the invention are very active and hence exhibit high polymerisation rates. They are sufficiently active to allow their use at very low concentrations, such as 40 ppm or less. At such low concentrations, the catalyst can often be left in the polyoxyalkylene polyether products without an adverse effect on product quality. The ability to leave catalysts in the polyol is an important advantage because commercial polyols currently require a catalyst removal step.

Polymerization of alkylene oxides is typically carried out by reacting a mixture of hydroxyl group-containing starter with DMC catalyst at a temperature of from 80 to 150 °C, more particularly from 90 to 130 °C at atmospheric pressure. Higher pressures may also be applied, but the pressure will usually not exceed 20 bar and preferably is from 1 to 5 bar. These reaction conditions are suitable for process step (i) and for process step (ii) according to the present invention.

In step (i) of the process according to the present invention, starter is reacted with alkylene oxide in the presence of DMC catalyst while mixing. The mixing is preferably carried out continuously. As mentioned in the discussion of East German Patent No. 203,735 in WO 98/03571, there is plug flow in a tubular reactor having alkylene feed added at one or more points along the reactor. Therefore, no mixing according to the present invention can be effected in a tubular reactor having feed and/or starter added at one or more points along the tubular reactor.

However, recycles can be used in step (i) of the present invention, such as a recycle to control the heat generation in step (i). Such recycle has been described for example in WO-A-01/6285, whereby the reaction is performed in a stirred-tank reactor and the reaction mixture is circulated via an externally located heat exchanger, using a pump.

The mixing according to the present invention is preferably carried out in a stirred tank reactor, preferably a continuously stirred tank reactor. A continuously stirred tank reactor is a reactor in which the fluid present in the reactor has substantially the same composition throughout the reactor, including at the outlet of the reactor.

The amount of alkylene oxide in the product obtained in step (i) can vary widely. The amount which is preferably present, depends on further circumstances such as the conversion which will be carried out in the pipe reactor of step (ii). The amount of alkylene oxide present in the product of step (i) is at least 0.05 %wt, preferably at least 0.1 %wt of alkylene oxide, based on total amount of product obtained in step (i). The amount of alkylene oxide more is at most 10 %wt, preferably at most 8 %wt, preferably less than 5 %wt.

The exact amount of alkylene oxide monomer which is present in the product of the continuously stirred tank reactor depends on the operating conditions of the reactor and over the average residence time. It is obvious that a lower average residence time, will give a higher amount of unconverted alkylene oxide in the product.

In step (ii) according to the present invention, the alkylene oxide present in the product of step (i) is reacted such that the product of step (ii) contains substantially no alkylene oxide. The amount of alkylene oxide which can be present in the product of step (ii) depends on the exact circumstances such as the alkylene oxide which is being used and the polyoxyalkylene polyether product which is being produced. The amount of alkylene oxide which is present in the product of step (ii) is less than 0.05 %wt, more specifically at most 0.01 %wt, most specifically at most 0.005 %wt. These amounts are based on total amount of product obtained in step (ii). Most specifically, the polyoxyalkylene polyether product obtained in step (ii) contains less than 50 ppm alkylene oxide, preferably less than 1 ppm alkylene oxide.

Step (ii) according to the present invention, is carried out in a pipe reactor. It is surprising that the reaction mixture obtained in step (i) can be reacted further in a very simple reactor which does not need to be specifically adapted to the process.

A pipe reactor can be any kind of tube or pipe or system containing multiple tubes or pipes. A multitubular system which can advantageously be used in the process of the present invention, is a heat exchanger. No substantial amount of starter, alkylene oxide and/or double metal cyanide complex catalyst is added to the pipe reactor.

Although mixing devices can be present in the pipe reactor, it has been found that good results can be obtained with a pipe not containing any mixing devices. The flow regime in the pipe preferably is turbulent as this makes that the pipe reactor can be relatively short. However, laminar flow has been found to be give good results as well.

The pipe reactor for use in the present invention will generally have a length of at least 5 meters, preferably at least 10 meters. The length preferably is at most 100 meters.

The diameter of the pipe reactor generally will be at least 0.05 meter, preferably at least 0.1 meter. The diameter is generally at most 2 meters, preferably at most 1 meter.

The residence time of the product of step (i) in the pipe reactor of step (ii) depends on the specific circumstances such as the amount of alkylene oxide present in the product of step (i), the amount of alkylene oxide which is acceptable for the product of step (ii) and the temperature of the reaction mixture. Generally, the residence time in the pipe reactor will be at least 0.5 minutes, preferably at least 1 minute, more preferably at least 2 minutes. The residence time generally will be at most 2 hours. Generally, the product obtained in step (i) has a residence time in the pipe reactor in the range of from 0.5 minute to 2 hours. Preferably, the residence time is at most 1.5 hours.

Polyoxyalkylene polyether products made with the catalysts of the invention suitably have a nominal average functionality of from 2 to 8, more suitably from 2 to 6. The polyols may have a number average molecular weight up to 50,000, but typically the molecular weight is within the range of 500 to 12,000, more typically from 2,000 to 8,000.

In step (iii), the product of step (ii) is removed from the process. The removal of product from the process according to step (iii) makes that product obtained in step (ii) is not sent back to step (i).

The polyoxyalkylene polyether product obtained in step (iii) according to the present invention contains a very low amount of alkylene oxide. Further processing of the polyoxyalkylene polyether product prepared according to the present invention, depends on the application of the polyoxyalkylene polyether product. In order to ensure that the alkylene oxide content of the polyoxyalkylene polyether product is reduced even further and/or to remove by-products, the product of step (iii) can be subsequently subjected to so-called stripping which comprises subjecting the reaction product obtained in step (iii) to reduced pressure, optionally in the presence of inert gas such as steam or nitrogen. The stripping can be carried out in any way known to be suitable to someone skilled in the art.

Several specific stripping processes have been described in US-A-6,060,627 and US-A-5,672,768. An especially advantageous method comprises subjecting the product of step (iii) to a process which comprises introducing the product of step (iii) at the upper end of a stripping column which is kept at reduced pressure, preferably a pressure of less that 50 mbara (5000N/m²), more preferably 5 to 10 mbara (500 to 1000 N/m²), and introducing stripping gas in the middle part of the column. Purified polyoxyalkylene polyether product is removed from the bottom of the stripping column. Stripping gas is removed at the top. This set-up has been found to be efficient and to give very pure polyoxyalkylene polyether products. Conventional stripping gases can be used such as steam and nitrogen. Optionally, the polyoxyalkylene polyether product obtained in step (iii) is subjected to reduced pressure before being introduced into the stripping column in order to remove part of the undesired compounds. Suitable pressures for such pre-treatment comprise pressures of from 50 to 200 mbara (5000 to 20,000 N/m²).

Dependent on the application of the polyoxyalkylene polyether product, further well-known additives can be added to the polyoxyalkylene polyether product. Generally, anti-oxidant will be added to the polyoxyalkylene polyether product before it is being processed further.

The process according to the present invention is illustrated further in the following example.

### Example 1

The DMC catalyst used was a highly viscous, stable, white coloured dispersion containing 5 wt% DMC catalyst particles dispersed in a propylene oxide adduct of glycerol having a number average molecular weight of 670 Dalton (G670), as described in Example 1 of European application 01306107.2.

A one litre continuously stirred tank reactor was charged with 89.0 grams of G670 and 0.60 gram of the DMC catalyst dispersion described above, containing 30 milligram DMC catalyst. After this addition, 388 grams of propylene oxide and 12.4 grams of glycerol were added in 2 hours. The temperature was 130 °C.

The propylene oxide concentration in the liquid phase at the end of the reaction in the continuously stirred tank reactor was 0.5 %wt, based on total amount of product obtained.

The mixture obtained was sent to a pipe reactor. The temperature of the pipe reactor was 115 °C, and the residence time of the mixture was 10 minutes.

The product of the pipe reactor contained less than 1 ppm of propylene oxide, based on total amount of product.

### Example 2

A one litre continuously stirred tank reactor was charged with 89.0 grams of G670 and 0.40 gram of the DMC catalyst dispersion described in Example 1, containing 20 milligram DMC catalyst. After this addition, 388 grams of propylene oxide and 12.4 grams of glycerol were added in 2 hours. The temperature was 130 °C.

The propylene oxide concentration in the liquid phase at the end of the reaction in the continuously stirred tank reactor was 0.7 %wt, based on total amount of product obtained.

The mixture obtained in the continuously stirred tank reactor was sent to a pipe reactor. The temperature of the pipe reactor was 115 °C, and the residence time of the mixture was 10 minutes.

The product of the pipe reactor contained 7 ppm of propylene oxide, based on total amount of product.

### Example 3

A one litre continuously stirred tank reactor was charged with 89.0 grams of G670 and 0.60 gram of the DMC catalyst dispersion described in Example 1, containing 30 milligram DMC catalyst. After this addition, 388 grams of propylene oxide and 12.4 grams of glycerol were added in 2 hours. The temperature was 120 °C.

The propylene oxide concentration in the liquid phase at the end of the reaction in the continuously stirred tank reactor was 1.0 %wt, based on total amount of product obtained.

The mixture obtained in the continuously stirred tank reactor was sent to a pipe reactor. The temperature of the pipe reactor was 115 °C, and the residence time of the mix was 10 minutes.

The product of the pipe reactor contained 20 ppm of propylene oxide, based on total amount of product.

## Claims

1. Process for preparing polyoxyalkylene polyether products, which process comprises (i) reacting starter and alkylene oxide in the presence of a double metal cyanide complex catalyst while mixing to obtain a product mixture containing at least 0.05 %wt and at most 10 %wt of alkylene oxide, and (ii) reacting in a pipe reactor the mixture obtained in step (i) to obtain a polyoxyalkylene polyether product comprising less than 0.05 %wt alkylene oxide, and (iii) removing the product of step (ii) from the process.

2. Process according to claim 1, in which process the product obtained in step (ii) contains at most 0.01 %wt of alkylene oxide.

3. Process according to claim 1 or 2, in which the product obtained in step (i) has a residence time in the pipe reactor in the range of from 0.5 minute to 2 hours.

4. Process according to any one of claims 1 to 3, in which step (i) is carried out in a continuously stirred tank reactor.

5. Process according to any one of claims 1 to 4, in which process the reaction product obtained in step (iii) is subsequently subjected to reduced pressure, optionally in the presence of an inert gas.

6. Process which comprises adding anti-oxidant to product obtained in a process according to claim 5.

## Patentansprüche

1. Verfahren zur Herstellung von Polyoxyalkylenpolyetherprodukten, welches Verfahren umfasst (i) das Umsetzen von Starter und Alkylenoxid in Gegenwart eines Doppelmetallcyanidkomplexkatalysators unter Mischen, um ein Produktgemisch mit wenigstens 0,05 Gew.-% und höchstens 10 Gew.-% Alkylenoxid zu erhalten, und (ii) das Umsetzen des im Schritt (i) erhaltenen Gemisches in einem Rohrreaktor, um ein Polyoxyalkylenpolyetherprodukt zu erhalten, umfassend weniger als 0,05 Gew.-% Alkylenoxid, und (iii) das Entfernen des Produkts von Schritt (ii) aus dem Verfahren.

2. Verfahren nach Anspruch 1, in welchem Verfahren das im Schritt (ii) erhaltene Produkt höchstens 0,01 Gew.-% Alkylen-oxid enthält.

3. Verfahren nach Anspruch 1 oder 2, worin das im Schritt (i) erhaltene Produkt eine Verweildauer im Rohrreaktor im Bereich von 0,5 Minuten bis zwei Stunden hat.

4. Verfahren nach einem der Ansprüche 1 bis 3, in welchem der Schritt (i) in einem kontinuierlich gerührten Tankreaktor ausgeführt wird.

5. Verfahren nach einem der Ansprüche 1 bis 4, in welchem Verfahren das im Schritt (iii) erhaltene Reaktionsprodukt darauffolgend verringertem Druck unterworfen wird, wahlweise in Gegenwart eines Inertgases.

6. Verfahren, welches das Zusetzen von Antioxidans zu dem in einem Verfahren nach Anspruch 5 erhaltenen Produkt umfasst.

## Revendications

1. Procédé destiné à la préparation de produits de type polyéther de polyoxyalkylène, lequel procédé comprend les étapes consistant à (i) faire réagir un initiateur et de l'oxyde d'alkylène en présence d'un catalyseur complexe de cyanure métallique double, tout en mélangeant le tout, en vue d'obtenir un mélange de produits contenant au moins 0,05 % en poids et, au maximum, 10 % en poids d'oxyde d'alkylène, et (ii) faire réagir dans un réacteur tubulaire le mélange obtenu à l'étape (i) dans le but d'obtenir un produit de type polyéther de polyoxyalkylène comprenant moins de 0,05 % en poids d'oxyde d'alkylène, et (iii) retirer le produit obtenu à l'étape (ii) du procédé.

2. Procédé selon la revendication 1, dans lequel procédé, le produit obtenu à l'étape (ii) contient au maximum 0,01 % en poids d'oxyde d'alkylène.

3. Procédé selon la revendication 1 ou 2, dans lequel le produit obtenu à l'étape (i) a un temps de séjour dans le réacteur tubulaire dans la plage de 0,5 minute à 2 heures.

4. Procédé selon l'une quelconque des revendications 1 à 3, dans lequel l'étape (i) est réalisée dans un réacteur à cuve agitée en continu.

5. Procédé selon l'une quelconque des revendications 1 à 4, dans lequel procédé, le produit réactionnel obtenu à l'étape (iii) est ensuite soumis à une pression réduite, éventuellement en présence d'un gaz inerte.

6. Procédé qui comprend l'addition d'un antioxydant au produit obtenu dans le cadre d'un procédé selon la revendication 5.
